# EUROPEAN PATENT APPLICATION

(11) **EP 4 465 500 A1**
(43) Date of publication of application: **20.11.2024**
(21) Application number: 23213690.3
(22) Date of filing: 01.12.2023
(51) Int. Cl.: H02K 5/26

(54) **MOUNTING ARRANGEMENTS**

(30) Priority: 16.05.2023 EP 23173625
(71) Applicant: GE Energy Power Conversion Technology Ltd, Rugby, Warwickshire CV21 1BD (GB)
(72) Inventor: MATHAI, Dennis, RUGBY, Warwickshire CV21 1BD (GB); COSTELLO, Glyn, RUGBY, Warwickshire CV21 1BD (GB)
(74) Representative: Serjeants LLP

(57) **Abstract**

A mounting arrangement (20) for mounting a stator frame of a rotating electrical machine on a stationary foundation is described. The stator frame includes a stator foot (4) adapted to support the stator frame on the foundation. The stator foot (4) has a lower surface that faces an upper surface of the foundation, and an upper surface (4b). The mounting arrangement (20) includes a lubricant positioned between the lower surface of the stator foot (4) and the upper surface of the foundation - e.g., a low-friction coating applied to the facing surfaces of a pair of lower shims (22, 24). The mounting arrangement (20) is adapted to allow the stator foot (4) to move in a lateral and/or axial direction relative to the foundation to accommodate thermal expansion of the stator frame in use.

## Description

### Technical Field

The present invention relates to mounting arrangements, and in particular to mounting arrangements for mounting a stator frame of a rotating electrical machine, e.g., a motor or generator, on a stationary foundation.

### Background Art

It is known to mount large diameter rotating electrical machines on steel reinforced concrete foundations. In particular, the stator frame that supports the stator of the electrical machine typically includes a pair of stator feet that are fixedly connected to the foundation. The foundation may be a "wall type" foundation which has a pair of vertical walls that are spaced apart in a lateral direction - i.e., a direction that is perpendicular to the rotational axis of the electrical machine. The electrical machine may be supported such that the stator frame extends into the void between the foundation walls. The stator feet are typically provided on opposite sides of the stator frame and each stator foot is fixedly connected to the upper surface of a respective foundation wall.

Heat transferred to the stator frame as a result of losses generated in the electrical machine during its operation will cause the stator frame to expand. Because the stator feet are fixedly connected to the vertical walls of the stationary foundation, such thermal expansion is transferred to the foundation. The foundation therefore has to be constructed to accommodate the load that is exerted by the stator frame as it expands in the lateral and/or axial direction.

EP 1655531 discloses a mounting arrangement for mounting part of the exhaust hood of a steam turbine to a concrete foundation. The mounting arrangement includes a fixed foundation plate and the steam turbine includes a footplate. Keys on the foundation plate are received in grooves in the footplate to constrain relative movement in an axial direction. Bolts extend through the footplate and the foundation plate and thermal expansion is accommodated by elongate slots in the footplate. A plurality of slide-plate assemblies are positioned between the foundation plate and the footplate. Each includes a mounting plate that locates a backing plate which supports a low-friction pad. Each low-friction pad is in sliding contact with a flat plate that is fixed to the underside of the footplate. The bolts that extend through the foundation plate are only loosely secured within the elongate slots in the exhaust hood footplate and therefore do not apply a downward compression load to the footplate.

### Summary of the invention

The present invention provides a mounting arrangement for mounting a stator frame of a rotating electrical machine, e.g., a motor or generator, on a stationary foundation. The stator frame comprises a stator foot adapted to support the stator frame on the foundation. The stator foot has a lower surface that faces an upper surface of the foundation, and an upper surface. The stator foot and the foundation do not form part of the mounting arrangement. The mounting arrangement comprises a first lubricant adapted to be positioned between the lower surface of the stator foot and the upper surface of the foundation. The mounting arrangement is adapted to allow the stator foot to move in a lateral and/or axial direction relative to the foundation to accommodate thermal expansion of the stator frame in use. The axial direction is parallel to the rotational axis of the electrical machine and the lateral direction is orthogonal to the axial direction. A vertical direction is orthogonal to both the lateral and axial directions.

The stator frame will normally have a second stator foot on the opposite side of the stator frame that is fixedly connected to the foundation - i.e., the second stator foot is not normally allowed to move in the lateral and axial directions relative to the foundation. Relative movement of the stator foot may optionally be constrained or limited in one of the lateral and axial directions. For example, the mounting arrangement may be adapted to allow the stator foot to move relative to the foundation in the lateral direction and any movement in the axial direction may be limited by an adjacent axial restraint that is fixedly connected to the foundation. Alternatively, the mounting arrangement may be adapted to allow the stator foot to move relative to the foundation in the axial direction and any movement in the lateral direction may be limited by an adjacent lateral restraint that is fixedly connected to the foundation.

The foundation may be of any suitable type or construction, e.g., a "wall type" foundation, and each stator foot may be adapted to be mounted on the upper surface of a respective part of the foundation or a respective wall. If the foundation is a "wall type" foundation, the mounted stator frame may extend into the void between the foundation walls that are spaced apart in the lateral direction. At least some of the thermal expansion of the stator frame during operation of the electrical machine is accommodated by the mounting arrangement, which allows one of the stator feet to move laterally and/or axially relative to the foundation. This means that the foundation, which may be made of a suitable material such as reinforced concrete, for example, may be designed and constructed to withstand a smaller lateral and/or axial load. In the case of a pre-existing foundation, using the mounting arrangement may remove the need for the foundation to be strengthened before mounting the electrical machine.

The lateral and/or axial movement between the stator foot and the foundation is facilitated by the first lubricant. In particular, the first lubricant provides a low-friction interface positioned between the stator foot and the foundation. Any suitable lubricant may be used. The first lubricant may be a liquid or semi-solid lubricant such as a suitable water-based, mineral oil-based or synthetic-based lubricant. The first lubricant may be a suitable lubricating oil, paste or grease. The first lubricant may be a non-liquid lubricant, which may be provided as a coating. The coating may comprise any suitable lubricant material such as tungsten disulphide or molybdenum disulphide, for example, which have good lubricating and hard-wearing properties. Such non-liquid lubricants may be more suitable in practice because of the compression load that is preferably applied across the low-friction interface - see below for more details. Liquid or semi-solid lubricants may also need to be regularly replenished.

It will be understood that the first lubricant provides a low-friction interface between a pair of facing surfaces. One surface will be stationary and the other may move in the lateral and/or axial direction as a result of the thermal expansion of the stator frame.

In one arrangement, the facing surfaces are the lower surface of the stator foot and the upper surface of the foundation - i.e., the first lubricant is adapted to be in direct contact with the facing lower surface of the stator foot and the upper surface of the foundation.

In another arrangement, the mounting arrangement may further comprise a lower shim that is adapted to be positioned between the lower surface of the stator foot and the upper surface of the foundation. The first lubricant may be adapted to be positioned between a lower surface of the lower shim and the upper surface of the foundation, and/or an upper surface of the lower shim and the lower surface of the stator foot.

The first lubricant may be a low-friction coating (e.g., a tungsten disulphide or molybdenum disulphide coating). The low-friction coating may be applied to one or both of the upper and lower surfaces of the lower shim. Such an arrangement may have practical benefits because it may often be easier to apply (and re-apply) a low-friction coating to a separate component such as a shim instead of the lower surface of the stator foot or the upper surface of the foundation.

The lower shim may include one or more openings for receiving one or more studs that project upwardly from the upper surface of the foundation - see below for more details. The one or more studs may also be formed as part of the lower shim if this is fixedly connectable to the foundation, for example.

The lower shim may be formed as a planar component, for example.

The lower shim may be fixedly connectable to the stator foot or the foundation, e.g., using one or more mechanical fixings such as screws or bolts. The lower shim may be formed with a L-shaped profile with a first planar part that is adapted to be positioned between the lower surface of the stator foot and the upper surface of the foundation and a second planar part, substantially perpendicular to the first planar part, that is adapted to be positioned against a side surface of the stator foot or the foundation. The second planar part may comprise one or more openings through which the one or more mechanical fixings are received in order to fixedly connect the lower shim to the stator foot or the foundation. Corresponding one or more openings may be provided in the side surface of the stator foot or the foundation for receiving the one or more mechanical fixings and may optionally include an internal screw thread.

The lower shim may be removable from the stator foot or the foundation - e.g., by untightening and removing the mechanical fixings. This allows the lower shim to be removed if it is necessary to re-apply the low-friction coating, for example.

In another arrangement, the mounting arrangement may further comprise a first lower shim and a second lower shim adapted to be positioned between the lower surface of the stator foot and the upper surface of the foundation. The first lubricant may be positioned between a lower surface of the first lower shim and an upper surface of the second lower shim.

The first lubricant may be a low-friction coating (e.g., a tungsten disulphide or molybdenum disulphide coating). The low-friction coating may be applied to one or both of the lower surface of the first lower shim and the upper surface of the second lower shim. It is preferably applied to both facing surfaces.

The first and second lower shims may include one or more openings for receiving one or more studs that project from the upper surface of the foundation - see below for more details. The one or more studs may also be formed as part of the second lower shim, which may be fixedly connectable to the foundation, for example.

The first and second lower shims may be formed as planar components, for example.

The first lower shim may be fixedly connectable to the stator foot e.g., using one or more mechanical fixings such as screws or bolts. The second lower shim may be fixedly connectable to the foundation, e.g., using one or more mechanical fixings such as screws or bolts. The first lower shim may be formed with a L-shaped profile with a first planar part and a second planar part, substantially perpendicular to the first planar part, that is adapted to be positioned against a side surface of the stator foot. The second planar part may comprise one or more openings through which the one or more mechanical fixings are received in order to fixedly connect the first lower shim to the stator foot. Corresponding one or more openings may be provided in the side surface of the stator foot for receiving the one or more mechanical fixings and may optionally include an internal screw thread. The one or more openings for receiving one or more studs of the mounting arrangement may be formed in the first planar part of the first lower shim.

The second lower shim may be formed with a L-shaped profile with a first planar part and a second planer part, substantially perpendicular to the first planar part, that is adapted to be positioned against a side surface of the foundation. The second planar part may comprise one or more openings through which the one or more mechanical fixings are received in order to fixedly connect the second lower shim to the foundation. Corresponding one or more openings may be provided in the side surface of the foundation for receiving the one or more mechanical fixings and may optionally include an internal screw thread. The respective first planar parts of the first and second lower shims are adapted to be positioned between the lower surface of the stator foot and the upper surface of the foundation. The one or more openings for receiving one or more studs of the mounting arrangement may be formed in the first planar part of the second lower shim.

The first and second lower shims may be removable from the stator foot and the foundation - e.g., by untightening and removing the mechanical fixings. This allows the first and second lower shims to be removed if it is necessary to re-apply the low-friction coating, for example.

The mounting arrangement may further comprise one or more studs, each stud being fixedly connectable to the foundation (e.g., embedded in the concrete foundation material) so that it projects upwardly from the upper surface of the foundation. Alternatively, the one or more studs may be formed as part of a lower shim or other component that is fixedly connectable to the foundation. Each stud extends in the vertical direction. Each stud is adapted to pass through a respective opening in the stator foot with a predetermined lateral and/or axial clearance that allows the stator foot to move in the lateral and/or axial directions relative to the stud to accommodate thermal expansion in use. More particularly, an inner surface of each opening in the stator foot may be spaced apart from a respective stud so that the stator foot may move relative to the stationary or fixed stud in the lateral and/or axial direction. Each opening in the stator foot may have a suitable shape and size - e.g., it may be substantially cylindrical, elongate etc. A typical lateral or axial clearance may be a few millimetres, for example. A lateral and/or axial clearance must also be provided between each stud and any opening in a movable component of the mounting arrangement, e.g., a shim that is fixedly connected or retained to the stator foot and which is designed to move laterally and/or axially with the stator foot.

A plurality of studs may be fixedly connectable to the foundation and spaced apart in the axial direction - i.e., along the rotational axis of the electrical machine. The stator foot may comprise a plurality of corresponding openings spaced apart in the axial direction in register with the studs.

The mounting arrangement may further comprise one or more mechanical fixing assemblies, each mechanical fixing assembly being mechanically fixed to a respective stud. Each mechanical fixing assembly may be adapted to prevent the stator foot from moving in the vertical direction and is preferably adapted to apply a compression load to the upper surface of the stator foot - i.e., a downward compression load that is intended to firmly clamp the stator foot between the one or more mechanical fixing assemblies and the upper surface of the foundation. The total compression load that is applied by the one or more mechanical fixings preferably ensures that there is no separation between the stator foot and the foundation due to machine torque, during both normal operation and fault conditions. The compression load applied by each mechanical fixing may be predefined and may be, for example, between about 150 kN and about 250 kN, e.g., about 200 kN, or may be more generally between about 0.5 kN and about 500 kN. The applied compression load may depend on the electrical and/or mechanical properties of the rotating electrical machine such as its torque, mass etc., and the load bearing capabilities of the stationary foundation. For example, the compression load applied by each mechanical fixing may depend on the torque density of the rotating electrical machine, where torque density is defined herein as the rated machine torque (kN·m) divided by the mass of the machine in metric tonnes (t). An example of different ranges of applied compression load is set out in Table 1 below.

**Table 1**

| Torque density (kN·m/t) | Applied compression load (kN) |
|---|---|
| Less than about 20 | About 0.5 to about 125 |
| About 20 to about 40 | About 125 to about 250 |
| About 40 to about 60 | About 250 to about 375 |
| About 60 to about 80 | About 375 to about 500 |

It may be noted that possible lower endpoints for the applied compression load may include about 0.5 kN, about 125 kN, about 150 kN, about 250 kN and about 375 kN, and that possible upper endpoints for the applied compression load may include about 125 kN, about 250 kN, about 375 kN and about 500 kN. These upper and lower endpoints may be used in any combination - it will be readily understood that an applied compression load in the range of about 125 kN to about 375 kN may be appropriate in some cases such as if the mounting arrangement is adapted to be used to mount a rotating electrical machine having a torque density of between about 20 kN-m/t and about 60 kN·m/t, for example.

A second lubricant may be adapted to be positioned between the upper surface of the stator foot and a facing lower surface of each mechanical fixing assembly.

The mounting arrangement may further comprise one or more upper shims, each upper shim adapted to be positioned between the upper surface of the stator foot and the lower surface of a respective mechanical fixing assembly. The second lubricant is adapted to be positioned between an upper surface of each upper shim and the lower surface of the mechanical fixing assembly and/or between a lower surface of each upper shim and the upper surface of the stator foot.

The second lubricant provides a low-friction interface between the stator foot and the one or more mechanical fixing assemblies. Any suitable lubricant may be used. The second lubricant may be a liquid or semi-solid lubricant such as a suitable water-based, mineral oil-based or synthetic-based lubricant. The second lubricant may be a suitable lubricating oil, paste or grease. The second lubricant may be a non-liquid lubricant, which may be provided as a coating. The coating may comprise any suitable lubricating material such as tungsten disulphide or molybdenum disulphide, for example. Such non-liquid lubricants may be more suitable in practice because of the compression load that is preferably applied across the upper and lower low-friction interfaces - see below for more details. Liquid or semi-solid lubricants may also need to be regularly replenished.

It will be understood that the second lubricant provides a low-friction interface between a pair of facing surfaces. One surface will be stationary and the other may move in the lateral and/or axial direction as a result of the thermal expansion of the stator frame.

In one arrangement, the facing surfaces are the upper surface of the stator foot and the lower surface of each mechanical fixing assembly - i.e., the second lubricant is adapted to be in direct contact with the facing upper surface of the stator foot and the lower surface of each mechanical fixing assembly.

In another arrangement, the mounting arrangement may further comprise one or more upper shims, each upper shim adapted to be positioned between the upper surface of the stator foot and the lower surface of a respective mechanical fixing assembly. The second lubricant may be adapted to be positioned between an upper surface of the upper shim and the lower surface of each mechanical fixing assembly, and/or a lower surface of the upper shim and the upper surface of the stator foot.

The second lubricant may be a low-friction coating (e.g., a tungsten disulphide or molybdenum disulphide coating). The low-friction coating may be applied to one or both of the upper and lower surfaces of each upper shim. Such an arrangement may have practical benefits because it may often be easier to apply (and re-apply) a low-friction coating to a separate component such as a shim instead of the upper surface of the stator foot or the lower surface of each mechanical fixing assembly.

Each upper shim may be formed as a planar component, for example.

Each upper shim may be retained in a corresponding recess in the upper surface of the stator foot or the lower surface of each mechanical fixing assembly. Each upper shim may comprise an opening for receiving a respective stud. Each upper shim may be removable - e.g., by untightening and removing the respective mechanical fixing assembly from the stud. This allows each upper shim to be removed if it is necessary to re-apply the low-friction coating.

In another arrangement, the mounting arrangement may further comprise one or more first upper shims and one or more second upper shims, each first and second upper shim adapted to be positioned between the upper surface of the stator foot and the lower surface of a respective mechanical fixing assembly. The second lubricant may be positioned between an upper surface of each first upper shim and a lower surface of each second upper shim.

The second lubricant may be a low-friction coating (e.g., a tungsten disulphide or molybdenum disulphide coating). The low-friction coating may be applied to one or both of the upper surface of each first upper shim and the lower surface of each second upper shim.

Each first and second upper shim may be formed as a planar component, for example.

Each first upper shim may be retained in a corresponding recess in the upper surface of the stator foot. Each second upper shim may be retained in a corresponding recess in the lower surface of a respective mechanical fixing assembly. Each first and second upper shim may comprise an opening for receiving a respective stud. Each stud is received through a first upper shim and a second upper shim. Each first and second upper shim may be removable - e.g., by untightening and removing the respective mechanical fixing assembly. This allows each first and second upper shim to be removed if it is necessary to re-apply the low-friction coating.

Each mechanical fixing assembly may further comprise at least one internally-screw threaded nut that is received on an externally screw-threaded part of the respective stud that extends above the upper surface of the stator foot. Each mechanical fixing may further comprise one or both of a washer and a spreader between the at least one nut and the upper surface of the stator foot or an upper shim if one is provided. The spreader is designed to spread an applied compression load across the upper surface of the stator foot and may be in direct contact with the stator foot or an upper shim. Other sorts of mechanical fixing assemblies or means for applying a downward compression load to the stator foot may also be used.

To mount the stator frame on the foundation, the one or more studs are received through the corresponding opening(s) in the stator foot. The lower surface of the stator foot may be in direct contact with the upper surface of the foundation (e.g., with the upper surface of the foundation wall) or alternatively one or more lower shims may be positioned between the lower surface of the stator foot and the upper surface of the foundation as described above. Each stud may be received through a corresponding opening in each lower shim. With the stator foot mounted on the foundation or the one or more lower shims, an upper part of each stud will extend or project above the upper surface of the stator foot. At least a part of the upper part of each stud may include an external screw thread. A mechanical fixing assembly may then be mechanically fixed to the projecting part of each stud. More particularly, one or more upper shims may be received on each stud, followed by an optional spreader and a washer. In one arrangement, a first nut is threaded onto the externally screw-threaded part of each stud and is tightened to contact the optional washer and apply a compression load to the stator foot through the optional spreader. As noted above, the compression load applied by each mechanical fixing may be predefined and may be, for example, between about 150 and about 250 kN, e.g., about 200 kN, or may be more generally between about 0.5 kN and about 500 kN. Multiplying the compression load applied by each mechanical fixing with the total number of mechanical fixings provides the total compression load that is applied to the foundation. A second nut may then be threaded onto the upper part of each stud and tightened to be in contact with the first nut, i.e., to lock it off. In other arrangements, the first nut may be tightened to contact the spreader, an upper shim, or the upper surface of the stator foot. The stator foot is clamped firmly between the foundation and the one or more mechanical fixing arrangements by the applied compression force, but it is still able to move in the lateral and/or axial direction to accommodate thermal expansion of the stator frame. As described above, low-friction interfaces are positioned between the stator foot and the stationary foundation and between the stator foot and stationary components of the mounting arrangement - e.g., the one or more mechanical fixing assemblies. Stationary components of the mounting arrangement also include any shims that are fixed relative to the foundation or the mechanical fixing assemblies. Moving components of the mounting arrangement include any shims that are fixed relative to the stator foot. The mounting arrangement reduces the load that is transferred to the stationary foundation, as a result of thermal expansion, to a quantified value.

The present invention further provides an assembly comprising a stator frame of a rotating electrical machine and a mounting arrangement as described above for mounting the stator frame on a stationary foundation. The stator frame comprises a stator foot adapted to support the stator frame on the foundation. The stator foot has a lower surface that faces an upper surface of the foundation, and an upper surface.

The present invention further provides an assembly comprising a stator frame of a rotating electrical machine, a stationary foundation, and a mounting arrangement as described above for mounting the stator frame to the foundation. The stator frame comprises a stator foot adapted to support the stator frame on the foundation. The stator foot has a lower surface that faces an upper surface of the foundation, and an upper surface.

The present invention further provides a mounting arrangement for mounting a stator frame of a rotating electrical machine on a stationary foundation, the stator frame comprising a stator foot adapted to support the stator frame on the foundation, wherein the stator foot has a lower surface that faces an upper surface of the foundation, and an upper surface, the mounting arrangement comprising a first lubricant adapted to be positioned between the lower surface of the stator foot and the upper surface of the foundation, and wherein the mounting arrangement is adapted to allow the stator foot to move in a lateral and/or axial direction relative to the foundation to accommodate thermal expansion of the stator frame in use, wherein the mounting arrangement further comprises:
one or more studs, each stud being fixedly connectable to the foundation so that it projects upwardly and is adapted to pass through a respective opening in the stator foot with a predetermined lateral and/or axial clearance that allows the stator foot to move in the lateral and/or axial direction relative to the stud to accommodate thermal expansion in use, and
one or more mechanical fixing assemblies, each mechanical fixing assembly being mechanically fixed to a respective stud and adapted to apply a compression load to the upper surface of the stator foot.

Other features of the mounting assembly may be as described above. The compression load applied by each mechanical fixing assembly may be between about 0.5 kN and about 500 kN, for example.

### Drawings

Figure 1 is an end view of an electrical machine mounted on a "wall type" foundation using a mounting arrangement according to the present invention;
Figure 2 is a side view of a mounting arrangement according to the present invention;
Figure 3 is a perspective view of the mounting arrangement of Figure 2;
Figure 4 is an end view of the mounting arrangement of Figure 2;
Figure 5 is a cross-section view of the mounting arrangement of Figure 2;
Figure 6 is a detail view of the mounting arrangement of Figure 2 showing a stud that is embedded in a foundation wall;
Figure 7A is a detail view of lower shims of the mounting arrangement of Figure 2 showing low-friction coatings; and
Figure 7B is a detail view of upper shims of the mounting arrangement of Figure 2 showing low-friction coatings.

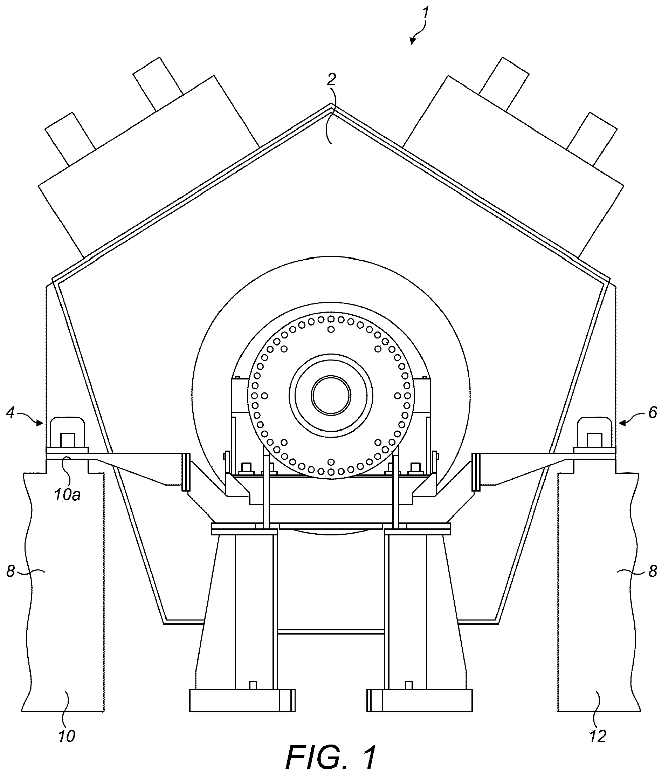

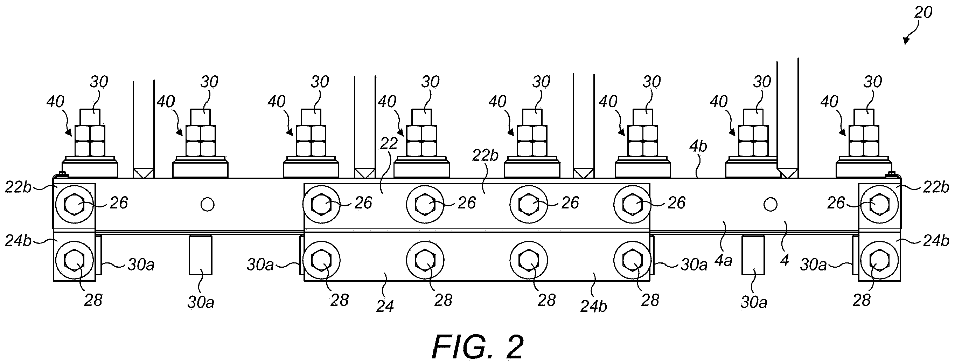

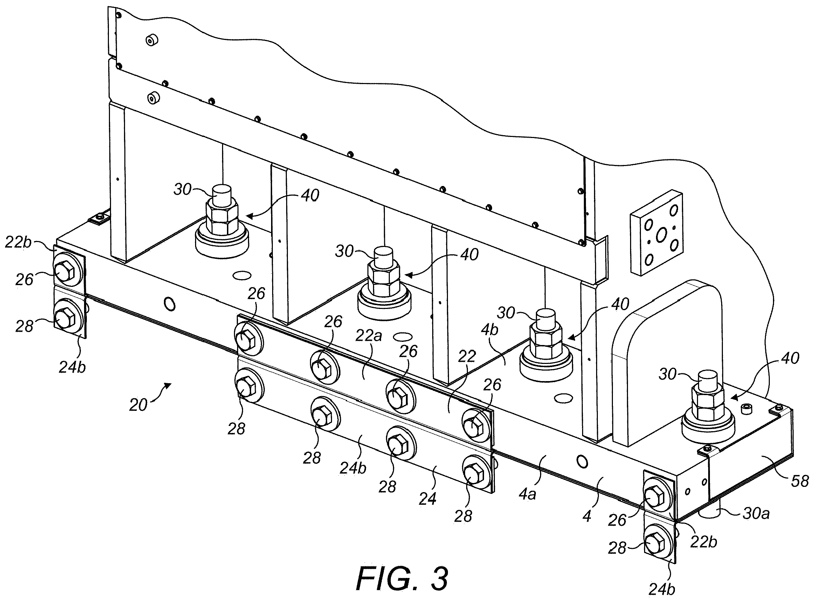

Referring to Figure 1, a rotating electrical machine 1, e.g., a motor or generator, includes a stator frame 2. The stator frame 2 includes a first stator foot 4 and a second stator foot 6. (In Figure 1, the first and second stator feet 4, 6 are shown schematically. The first stator foot 4 and the mounting arrangement 20 of the present invention are shown in more detail in Figures 2 to 6.) The first and second stator feet 4, 6 support the stator frame 2 on a "wall type" foundation 8. More particularly, the foundation 8 includes a first wall 10 having an upper surface 10a and a second wall 12 having an upper surface. The first stator foot 4 supports the stator frame 2 on the upper surface 10a of the first wall 10 and the second stator foot 6 supports the stator frame on the upper surface of the second wall 12. The first and second walls 10, 12 are spaced apart in a lateral direction and part of the stator frame 2 extends into the void 14 between them.

The foundation 8 may be made of reinforced concrete, for example.

Figures 2 to 6 show a mounting arrangement 20 for mounting the first stator foot 4 to the first wall 10 so that it may move in a lateral direction relative to the foundation 8 to accommodate thermal expansion of the stator frame 2. The second stator foot 6 is fixedly connected to the second wall 12, and in particular to the upper surface, and is not allowed to move in the lateral direction relative to the foundation 8.

The mounting 20 includes a first lower shim 22 and a second lower shim 24.

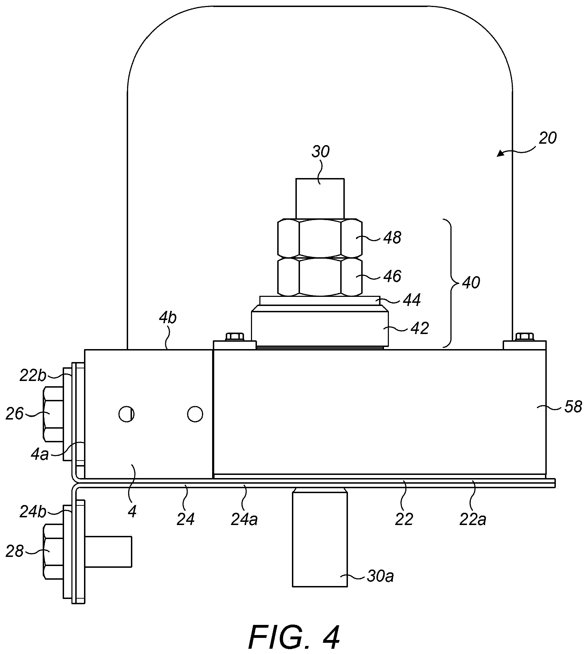

As most clearly shown in Figure 4, the first lower shim 22 is formed with a L-shaped profile and includes a first planar part 22a and a plurality of second planar parts 22b substantially perpendicular to the first planar part. The second planar parts 22b extend upwardly and are adapted to be positioned against a side surface 4a of the first stator foot 4. The second planar parts 22b have six openings through which six bolts 26 are received to fixedly connect the first lower shim 22 to the first stator foot 4. Corresponding internally screw-threaded openings (not shown) are provided in the side surface 4a of the first stator foot 4 for receiving the bolts 26.

The second lower shim 24 is formed with a L-shaped profile and includes a first planar part 24a and a plurality of second planar parts 24b substantially perpendicular to the first planar part. The second planar parts 24b extend downwardly and are adapted to be positioned against a side surface (not shown) of the first wall 10. The second planar parts 24b have six openings through which six bolts 28 are received to fixedly connect the second lower shim 24 to the first wall 10. Corresponding internally screw-threaded openings are provided in the side surface (not shown) of the first wall 10 for receiving the bolts 28.

A low-friction coating (e.g., tungsten disulphide) is applied to the lower surface of the first planar part 22a of the first lower shim 22 and to the upper surface of the first planar part 24a of the second lower shim 24 - i.e., the low-friction coating is applied to the facing surfaces to define a low-friction sliding interface therebetween. The low-friction interface facilitates sliding movement in the lateral direction between the first stator foot 4 and the stationary foundation 8. In particular, it facilitates sliding movement between the first and second lower shims 22, 24 that are respectively fixedly connected to the first stator foot 4 and the foundation 8.

The first and second lower shims 22, 24 are removable from the first stator foot 4 and the first wall 10 of the foundation 8 - e.g., by untightening and removing the bolts 26, 28. This allows the first and second lower shims 22, 24 to be removed if it is necessary to re-apply the low-friction coating, for example.

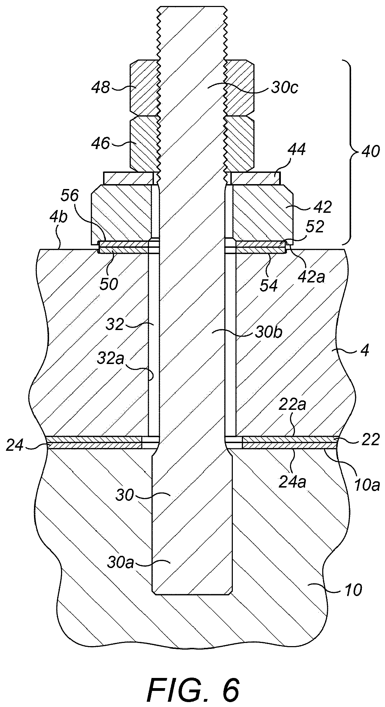

The mounting arrangement 20 includes eight studs 30. The studs 30 are spaced apart in the axial direction and are fixedly connected to the first wall 10. Figures 2 to 5 show a base part 30a of each stud 30 that is designed to be embedded in, or otherwise fixedly connected to, the concrete foundation. When embedded, the studs 30 project upwardly from the upper surface 10a of the first wall 10 - see Figure 6, for example. Each stud 30 passes through a respective opening 32 in the first stator foot 4 with a predetermined lateral clearance that allows the first stator foot 4 to move in the lateral direction relative to the studs 30 to accommodate thermal expansion of the stator frame 2. Figure 6 shows one of the studs 30 with its base part 30a embedded in the first wall 10. Figure 6 also shows more clearly that each stud 30 includes an intermediate part 30b which has a smaller diameter than the base part 30a, and an upper part 30c. The intermediate and upper parts 30b, 30c project above the upper surface 10a of the first wall 10. The upper part 30c projects above the upper surface 4b of the first stator foot 4. Part of the upper part includes an external screw thread. The intermediate part 30b passes through the corresponding opening 32 in the first stator foot 4. The opening 32 has a larger diameter than the intermediate part 30b of the stud 30 so that a lateral clearance is provided between the stud and the inner surface 32a of the opening 32. A typical lateral clearance may be a few millimetres, for example. Although in this example, the studs 30 and the corresponding openings 32 have a substantially circular cross-section, where the diameter of each opening is larger than the diameter of the intermediate part 30b of each stud, it will be understood that other shapes are possible. For example, the corresponding openings may be elongate in the lateral direction. There is also a lateral clearance between the openings in the first planar part 22a of the first lower shim 22 and the studs 30, and between the opening in each first upper shim 50 and the respective stud 30 - see below. In other words, the openings in the first lower shim 22 and the opening in each first upper shim 50 must be sized accordingly to allow them to move laterally with the first stator foot 4.

The first planar part 22a of the first lower shim 22 includes eight openings for receiving the studs 30. Similarly, the first planar part 24a of the second lower shim 24 includes eight openings for receiving the studs 30. The openings are spaced apart in the axial direction. Although the first and second lower shims 22, 24 are formed as single components, it will be understood that other arrangements are possible, e.g., the lower shims may be formed in two or more sections.

The mounting arrangement 20 also includes eight mechanical fixing assemblies 40. Each mechanical fixing assembly 40 is mechanically connected to a respective stud 30. Each mechanical fixing assembly 40 includes a spreader 42, a washer 44, a first nut 46, and a second nut 48. The first and second nuts 46, 48 are screwed onto the externally screw-threaded part of the upper part 30c of the respective stud 30.

The mounting arrangement 20 also includes eight pairs of upper shims. In particular, the mounting arrangement 20 includes eight first upper shims 50 and eight second upper shims 52. Each upper shim includes an opening and is received over a respective stud 30 as shown most clearly in Figure 6. Each first upper shim 50 is retained in a recess 54 in the upper surface 4b of the first stator foot 4 and each second upper shim 52 is retained in a recess 56 in the lower surface 42a of the respective spreader 42. It will be understood that other arrangements of the upper shims are possible.

To mount the stator frame 2 on the foundation 8, the first and second lower shims 22, 24 are located over the studs 30 - i.e., so that the studs are received through the corresponding openings in the first planar parts 22a, 24a of the lower shims. The second lower shim 24 is fixedly connected to the first wall 10 of the foundation 8 using the bolts 28.

The first stator foot 4 is located over the studs 30 - i.e., so that the studs are received through the corresponding openings 32 and project above the upper surface 4b of the first stator foot. The first lower shim 22 is fixedly connected to the first stator foot 4 using the bolts 26.

The second stator foot 6 is fixedly connected to the second wall 12 of the foundation 8 in a conventional way.

The first and second upper shims 50, 52 are located over the studs 30 - i.e., so that each stud is received through the corresponding opening in a first and second upper shim. Each first upper shim 50 is retained in a corresponding recess 54 formed in the upper surface 4b of the first stator foot 4. The recesses 54 are concentric with the openings 32 in the first stator foot 4 that receive the studs 30.

The mechanical fixing assemblies 40 are then mechanically fixed to the studs 30. More particularly, a spreader 42 is located over each stud 30 so that each second upper shim 52 is retained in the corresponding recess 56 formed in the lower surface 42a of the spreader. Each spreader 42 includes an opening for receiving the stud 30. The recess 56 is concentric with the opening in the spreader 42 that receives the stud 30. A washer 44 is located over each stud 30 on top of the spreader 42. A first nut 46 is screwed onto each stud 30 and tightened to apply a compression load to the first stator foot 4. Finally, a second nut 48 is screwed onto each stud 30 and tightened to contact the first nut 46 to lock it off.

The compression load applied to the first stator foot 4 by each of the mechanical fixing assemblies 40 may be predefined and may be between about 0.5 kN and about 500 kN, for example. In one example, the applied compression load may be between about 125 kN and about 250 kN if the torque density of the rotating electrical machine is between about 20 kN·m/t and about 40 kN·m/t. In one example, the applied compression load may be about 200 kN, for example. The compression load is designed to clamp the first stator foot 4 between the foundation 8 and the mechanical fixing arrangements 40 while still permitting the first stator foot 4 to move in the lateral direction to accommodate thermal expansion of the stator frame 2. As described above, a low-friction sliding interface is positioned between the first stator foot 4 and the stationary foundation 8 - i.e., between the lower surface of the first planar part 22a of the lower shim 22 that is fixedly connected to the first stator foot 4 and the facing upper surface of the first planar part 24a of the second lower shim 24 that is fixedly connected to the first wall 10. A low-friction sliding interface is also positioned between the first stator foot 4 and the mechanical fixing assemblies 40 that are fixedly connected to the first wall 10 through the studs 30. More particularly, the low-friction sliding interface is positioned between the facing surfaces of the first and second upper shims 50, 52. The lateral clearance between each stud 30 and the corresponding opening 32 in the first stator foot 4 (and between each stud and the other moving components of the mounting arrangement) allows the first stator foot 4 to move laterally relative to the foundation 8 and the fixed, or stationary, components of the mounting arrangement including the studs 30, the mechanical fixing assemblies 40 that are fixedly connected to the studs, the second lower shim 24, and the second upper shims 52. This means that the foundation 8 may be designed and constructed to withstand a smaller lateral load applied by the thermal expansion of the stator frame 2 during operation of the electrical machine.

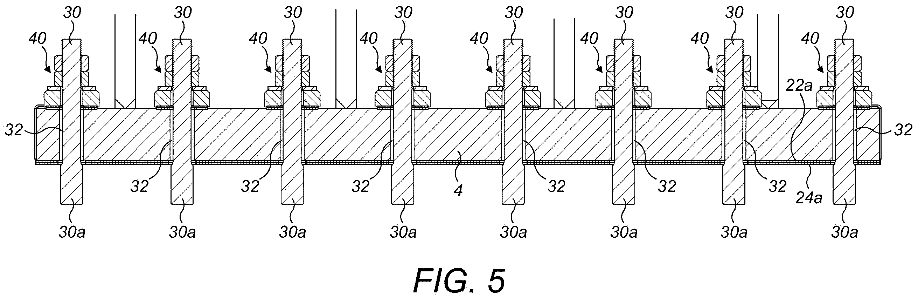

Figures 4 and 5 show an end shim 58 that is positioned at the axial end of the first stator foot 4. An identical end shim (not shown) is positioned at the opposite axial end of the first stator foot 4. The end shims 58 are in contact with a respective axial restraint (not shown) to limit any movement of the stator frame 2 in the axial direction. The axial restraints (not shown) are fixedly connected to the upper surface 10a of the first wall 10. A low-friction coating (e.g., tungsten disulphide) is applied to the outer surface of each shim 58 and optionally to the facing contacting surface of the axial restraint to define a low-friction sliding interface therebetween. The low-friction interface facilitates sliding movement in the lateral direction between the first stator foot 4 and the stationary foundation 8. In particular, it facilitates sliding movement between each end shim 58 and the axial restraints (not shown) that are respectively fixedly connected to the first stator foot 4 and the foundation 8. Although the mounting arrangement 20 shown in Figures 2 to 6 is designed to permit relative lateral movement between the first stator foot 4 and the foundation 8, whilst at the same time constraining or limiting relative axial movement, an alternative mounting arrangement may be designed to permit relative axial movement between the first stator foot and the foundation, whilst constraining or limiting relative movement in the lateral direction, for example.

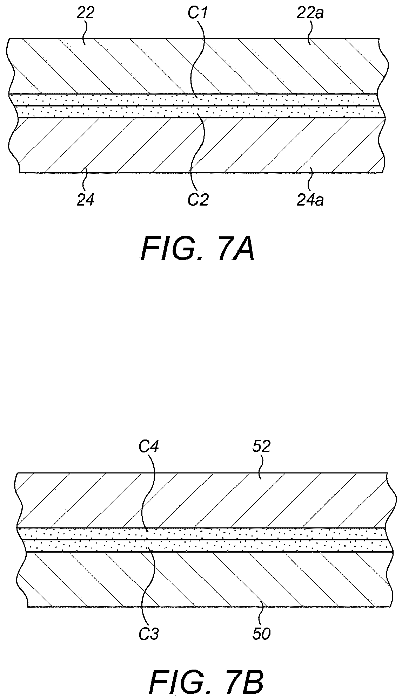

Figure 7A shows a detail view of the first and second lower shims 22, 24 where a first low-friction coating C1 (e.g., tungsten disulphide) is applied to the lower surface of the first planar part 22a of the first lower shim 22 and a second low-friction coating C2 (e.g., tungsten disulphide) is applied to the upper surface of the first planar part 24b of the second lower shim 24. Figure 7B shows a detail view of a pair of first and second upper shims 50, 52 where a third low-friction coating C3 (e.g., tungsten disulphide) is applied to an upper surface of the first shim 50 and a fourth low-friction coating C4 (e.g., tungsten disulphide) is applied to a lower surface of the second shim 52.

Although in the mounting arrangement 20 described above, the low-friction interfaces are provided by the low-friction coatings C1, C2, ..., C4, it will be understood that other lubricants may also be used, e.g., liquid or semi-solid lubricants such as suitable water-based, mineral oil-based or synthetic-based lubricants. For example, the lubricant between the first and second lower shims 22, 24 and between the first and second upper shims 50, 52 may be a suitable lubricating oil, paste or grease. The low-friction coating may also be applied to only one of the facing surfaces, for example.

## Claims

1. A mounting arrangement (20) for mounting a stator frame (2) of a rotating electrical machine (1) on a stationary foundation (8, 10), the stator frame (2) comprising a stator foot (4) adapted to support the stator frame (2) on the foundation (8, 10), wherein the stator foot (4) has a lower surface that faces an upper surface (10a) of the foundation (8, 10), and an upper surface (4b), the mounting arrangement (20) comprising a first lubricant (C 1, C2) adapted to be positioned between the lower surface of the stator foot (4) and the upper surface of the foundation (8, 10), and wherein the mounting arrangement (20) is adapted to allow the stator foot (4) to move in a lateral and/or axial direction relative to the foundation (8, 10) to accommodate thermal expansion of the stator frame (2) in use.

2. A mounting arrangement (20) according to claim 1, further comprising a lower shim (22) adapted to be positioned between the lower surface of the stator foot (4) and the upper surface (10a) of the foundation (8, 10), and wherein the first lubricant is adapted to be positioned between a lower surface of the lower shim (22) and the upper surface (10a) of the foundation (8, 10) and/or between an upper surface of the lower shim (22) and the lower surface of the stator foot (4).

3. A mounting arrangement (20) according to claim 2, wherein the first lubricant is a coating (C1) applied to one or both of the lower and upper surfaces of the lower shim (22).

4. A mounting arrangement (20) according to claim 2 or claim 3, wherein the lower shim (22) is fixedly connectable to the stator foot or the foundation.

5. A mounting arrangement (20) according to claim 1, further comprising a first lower shim (22) and a second lower shim (24) adapted to be positioned between the lower surface of the stator foot (4) and the upper surface (10a) of the foundation (8, 10), and wherein the first lubricant (C1, C2) is positioned between a lower surface of the first lower shim (22) and an upper surface of the second lower shim (24).

6. A mounting arrangement (20) according to claim 5, wherein the first lubricant is a coating (C1, C2) applied to one or both of the lower surface of the first lower shim (22) and the upper surface of the second lower shim (24).

7. A mounting arrangement (20) according to claim 5 or claim 6, wherein the first lower shim (22) is fixedly connectable to the stator foot (4) and the second lower shim (24) is fixedly connectable to the foundation (8, 10).

8. A mounting arrangement (10) according to any preceding claim, further comprising:
one or more studs (30), each stud (30) being fixedly connectable to the foundation (8, 10) so that it projects upwardly and is adapted to pass through a respective opening (32) in the stator foot (4) with a predetermined lateral and/or axial clearance that allows the stator foot (4) to move in the lateral and/or axial direction relative to the stud (30) to accommodate thermal expansion in use,
one or more mechanical fixing assemblies (40), each mechanical fixing assembly (40) being mechanically fixed to a respective stud (30) and adapted to apply a compression load to the upper surface (4b) of the stator foot (4), and
a second lubricant (C3, C4) adapted to be positioned between the upper surface (4b) of the stator foot (4) and a facing lower surface (42a) of each mechanical fixing assembly (40).

9. A mounting arrangement (20) according to claim 8, further comprising one or more upper shims (50), each upper shim (50) adapted to be positioned between the upper surface (4b) of the stator foot (4) and the lower surface (42a) of a respective mechanical fixing assembly (40), and wherein the second lubricant is adapted to be positioned between an upper surface of each upper shim (50) and the lower surface (42a) of the respective mechanical fixing assembly (40) and/or between a lower surface of each upper shim (50) and the upper surface (4b) of the stator foot (4).

10. A mounting arrangement (10) according to claim 9, wherein the second lubricant is a coating (C3) applied to one or both of the lower and upper surfaces of each upper shim (50).

11. A mounting arrangement (20) according to claim 8, further comprising one or more first upper shims (50) and one or more second upper shims (52), each first and second upper shim (50, 52) adapted to be positioned between the upper surface (4b) of the stator foot (4) and the lower surface (42a) of a respective mechanical fixing assembly (40), and wherein the second lubricant (C3, C4) is positioned between an upper surface of each first upper shim (50) and a lower surface of each second upper shim (52).

12. A mounting arrangement (20) according to claim 11, wherein the second lubricant is a coating (C3, C4) applied to one or both of the upper surface of each first upper shim (50) and the lower surface of each second upper shim (52).

13. A mounting arrangement (20) according to any of claims 8 to 12, wherein each mechanical fixing assembly (40) comprises at least one internally screw-threaded nut (46, 48) that is received on an externally screw-threaded part (30c) of the respective stud (30) that extends above the upper surface (4b) of the stator foot (4), and optionally one or both of a washer (44) and a spreader (42) between the at least one nut (46, 48) and the upper surface (4b) of the stator foot (4) or a respective upper shim (52).

14. A mounting arrangement (20) for mounting a stator frame (2) of a rotating electrical machine (1) on a stationary foundation (8, 10), the stator frame (2) comprising a stator foot (4) adapted to support the stator frame (2) on the foundation (8, 10), wherein the stator foot (4) has a lower surface that faces an upper surface (10a) of the foundation (8, 10), and an upper surface (4b), the mounting arrangement (20) comprising a first lubricant (C 1, C2) adapted to be positioned between the lower surface of the stator foot (4) and the upper surface of the foundation (8, 10), and wherein the mounting arrangement (20) is adapted to allow the stator foot (4) to move in a lateral and/or axial direction relative to the foundation (8, 10) to accommodate thermal expansion of the stator frame (2) in use, wherein the mounting arrangement (20) further comprises:
one or more studs (30), each stud (30) being fixedly connectable to the foundation (8, 10) so that it projects upwardly and is adapted to pass through a respective opening (32) in the stator foot (4) with a predetermined lateral and/or axial clearance that allows the stator foot (4) to move in the lateral and/or axial direction relative to the stud (30) to accommodate thermal expansion in use, and
one or more mechanical fixing assemblies (40), each mechanical fixing assembly (40) being mechanically fixed to a respective stud (30) and adapted to apply a compression load to the upper surface (4b) of the stator foot (4).

15. A mounting arrangement according to claim 14, wherein the compression load applied by each mechanical fixing assembly (40) is between about 0.5 kN and about 500 kN.
